(19) Europäisches Patentamt
European Patent Office
Office européen des brevets

(11) Publication number: **0 502 611 A2**

# (12) EUROPEAN PATENT APPLICATION

(21) Application number: **92300900.5**

(22) Date of filing: **03.02.92**

(51) Int. Cl.[5]: **C08L 63/00**, C08G 59/66, C08F 283/10

(30) Priority: **04.03.91 US 665617**

(43) Date of publication of application: **09.09.92 Bulletin 92/37**

(84) Designated Contracting States: **DE FR GB IT**

(71) Applicant: **MORTON INTERNATIONAL, INC.**
**Morton International Building 100 North Riverside Plaza Randolph Street at the River**
**Chicago Illinois 60606-1596(US)**

(72) Inventor: **Fiorillo, Anthony**
**5817 Shadowood Drive**
**Crystal Lake, Illinois 60012(US)**

(74) Representative: **Bankes, Stephen Charles Digby et al**
**BARON & WARREN 18 South End Kensington**
**London W8 5BU(GB)**

## (54) Rapid gel system in conjunction with epoxy resins.

(57) An epoxy resin system, comprising an epoxy resin and a Lewis base curative therefor, is provided with a quick gelling system to provide initial adhesion. The quick gelling system comprises a component having an acrylate functionality of at least 2 and a component having a mercaptan functionality of at least 2, the sum of the acrylate funtionality and mercaptan functionality being at least about 4.5.

EP 0 502 611 A2

The present invention is directed to epoxy resin systems for adhesives, coatings, etc., and particularly to an epoxy resin system that includes a rapid gel chemical system which provides temporary adhesion as the epoxy resin cures.

Known for toughness, adhesion, chemical resistance and excellent electrical properties, epoxy resins have gained wide acceptance as adhesives and protective coatings. An important cure mechanism of epoxy resins is through cross-linking of epoxy molecules induced by a Lewis base, such as a tertiary amine. Generally, such cure requires a substantial period of time, typically ranging from an hour to several hours or even a number of days. If used as an adhesive, the extended cure time generally requires that the objects which are being adhered be temporarily held together by mechanical means, such as clamps. It is often desirable that a more rapid cure be available so that mechanical means need not be utilized to temporarily hold objects together during curing.

One system of providing a rapid pre-cure to epoxy resin systems is by use of a multi-functional mercaptan in which terminal -SH groups attach to epoxide groups of the epoxy resin. Such mercaptans are sold, for example, under the tradename Capcure 3-800 by Diamond Shamrock of Morristown, New Jersey.

The need exists for additional chemical systems which provide a rapid pre-cure for epoxy resin systems, whereby the need for extended mechanical hold, during cure, may be eliminated in many cases.

In accordance with the invention, in conjunction with an epoxy resin system that includes an epoxy resin and a Lewis base catalyst, there is provided a rapid gelling system which includes an acrylate having acrylate functionality of 2 or higher plus a mercaptan having mercaptan functionality of 2 or higher, provided that the total mercaptan functionality plus acrylate functionality is about 4.5 or above. A Lewis base promotes gelling of the rapid gelling system as well as the slower cure of the epoxy system itself.

The basis of the system is the epoxy resin, the curing of which provides the strong adhesion or coating. The epoxy resin may be selected from any of a wide variety of epoxy resins having sufficient epoxy functionality to cure into a cross-linked structure. Such epoxy resins include, but are not limited to epichlorohydrin and Bisphenol A-derived resins, epoxy cresol novolac resins, epoxy phenol novolac resins, bisphenol F resins, polynuclear phenol-glycidyl ether-derived resins, cycloaliphatic resins, tetraglycicylmethyienedianiline-derived resins, triglycidyl-p-aminophenol-derived resins, triazine-based resin, and hydantoin epoxy resins. Epoxy resins useful in the invention also include those in which epoxy-containing moieties have been introduced into resins of other derivation, e.g., by grafting or end capping. Exemplified, hereinafter, are polysulfides that end-capped with epichlorohydrin.

As the epoxy resin provides the adhesion or coating, amounts of other components will herein be described in terms of parts by weight relative to 100 parts by weight of epoxy resin. Molecular weights herein are number averages.

The present invention is directed to epoxy resin systems in which cure is catalytically effected by means of a Lewis base, such as an amine or a polyamide. Practically any amine may serve as a Lewis base; preferably a tertiary amine is the Lewis base. Alphatic and cycloalphatic amines are known to be useful. Two suitable tertiary amines which are often used in epoxy resin systems are dimethylaminomethylphenol and 2,4,6-tri(dimethylaminomethyl)phenol. Useful amines also include those sold under the tradenames Ancamine 1637 and Ancamine 1856 sold by Pacific Anchor, a Division of Air Products.

Because the Lewis base acts catalytically, the amount used may vary over a very wide range, depending upon factors, such as desired cure time, functionality of the Lewis Base relative to its molecular weight and functionality of the epoxy resin relative to its molecular weight. Amounts of the Lewis base typically range from about 1 to about 100 parts of the epoxy resin; however, higher, and particularly lower levels may be used. If an amine is the Lewis base catalyst, the parts per hundred of the catalyst tend to be at the low end of the range. If a polyamide is selected as the Lewis base catalyst, the parts per hundred of the catalyst tend to be toward the upper end of the range. As the Lewis base also catalyzes the gelling system, it is preferred to add more of the Lewis base to the entire composition than would be used for cure of the epoxy system alone, e.g., up to about twice the amount which would otherwise be used. However, as the action of the Lewis base is catalytic, this is not necessary.

The gelling system that provides temporary adhesion (or coating) is based upon a molecule having multiple acrylate functionality (at least an acrylate functionality of 2) and a molecule having multiple mercaptan functionality (at least a mercaptan functionality of 2). To produce the rapid gelling, it appears to be necessary that there be some cross-linking of the acrylate and the mercaptan. To this end, it appears to be necessary that the sum of the acrylate functionality of the acrylate plus the mercaptan functionality of the mercaptan be about 4.5 or higher. In experiments in which the mercaptan and acrylate both had functionalities of 2, gelling was slow. However, if a mercaptan having a functionality of 2 is reacted with an acrylate acrylate mixture having an average acrylate functionality of about 2.5, rapid gelling occurs. In the presence of a Lewis base catalyst, these components gel within a very short time, typically under 5 minutes

and even under 1 minute. These components gel in the absence of an epoxy system, but do not in themselves produce a strong adhesive or permanent coating. However, the gel does provide at least temporary adhesion which may obviate the need to mechanically hold objects together while the epoxy resin is curing. The same gelling which occurs in the absence of an epoxy resin occurs in the presence of an epoxy resin. Also, gelling times appear to be substantially the same whether in the presence or absence of the epoxy resin. The chemical mechanism for the gelling reaction has not been studied and applicants are not bound by any scientific theory; however, it is believed that the mercaptan groups react with the carbon-carbon double bonds of the acrylate groups. There may be some degree of reaction of the mercaptan groups with the epoxy groups of the epoxy resin, similar to the action of the cure rate enhancers described above in the "Background of the Invention"; however, in view of the gelling that occurs in a similar manner in the absence of epoxy resin, it is believed that the -SH groups of the mercaptan react with the acrylate groups substantially preferentially to any reaction with epoxy groups.

It appears preferential that there be some spatial separation of acrylate groups on the acrylate-containing component of the gelling system. This may be accomplished, for example, by end-capping a polymeric material with acrylate functionality. For example, applicant has found success with end-capping relatively short-chain polysulfides (MW 1000 to 4000) with triacrylates, such as trimethylolpropanetriacrylate. In order that the acrylate not induce premature curing of the epoxy resin if packaged with the epoxy resin, the acrylate-containing component should not contain free carboxyl groups, i.e., the carboxyl groups should be esterified.

The mercaptan used in accordance with the present invention should have a mercaptan functionality of 2 or higher. -SH - containing polymers, such as -SH - terminated polysulfides, are useful mercaptans for purposes of the present invention. If -SH - containing polymers are used, it is preferred that the molecular weight be relatively low, e.g., between about 500 and about 5000. Also, monomers with multiple mercaptan functionality, such as pentaerythritoltetra(3-mercaptopropionate) may be used.

The amounts of the components of the quick gelling system may vary over a large range, depending upon the degree of initial hold that the quick gelling system must provide, the functionalities and molecular weights of the acrylate-containing component and the mercaptan-containing component, and the requisite final properties of the cured epoxy adhesive or coating. As noted above, the quick gelling chemical system contributes little in the way of permanent adhesion; accordingly, epoxy adhesives prepared using the quick gelling system of the present invention may have less strength than the same epoxy formulation without the quick gelling system. On the other hand, the cured epoxy resin composition, which includes the quick gelling chemical system, has more flexibility. Stated otherwise, the quick gelling system tends to lower tensile strength and increase elongation of the cured epoxy resin composition. Generally, the acrylate-containing component will be provided at between about 10 and about 100 parts of the epoxy resin and the mercaptan-containing component will be provided at between about 5 and about 100 parts of the epoxy resin. The total mercaptan functionality of the mercaptan-containing component is preferably about equal to or less than the total acrylate functional of the acrylate-containing component.

As is generally the case with epoxy resin systems, the curative is packaged separately and added to the epoxy resin at the time of use. The acrylate-containing component of the gelling system is compatible with the epoxy resin. The mercaptan-containing component is compatible with the Lewis base curative. Thus a two-package system is provided, the epoxy and acrylate in one package and the curative and mercaptan-containing component in the other package.

The entire composition may also include other components known in the art, such as fillers, lubricants, stabilizers, pigments, thickening agents, etc.

The invention will now be described in greater detail by way of specific examples.

## EXAMPLE 1

A first composition (Part A) was prepared by mixing 50 parts of a Bishenol A epoxy resin (WPE 190) with 25 parts of acrylated polysulfide having an acrylate functionality of 4. The acrylate polysulfide was the reaction product of an -SH terminated polysulfide sold as LP-3 by Morton International, Inc., having a number average molecular weight of about 1000 with trimethylolpropanetriacrylate (TMPTA). Production of polysulfide polymers end-capped with acrylate containing moieties is described as follows:

One mole of LP + 2 moles TMPTA + 0.1 mole triethylenediamine is heated at 80 °C for 4 hours. The percent -SH is monitored and the reaction is considered complete when the percent -SH is less then 0.02.

This acrylated LP has the general formula:

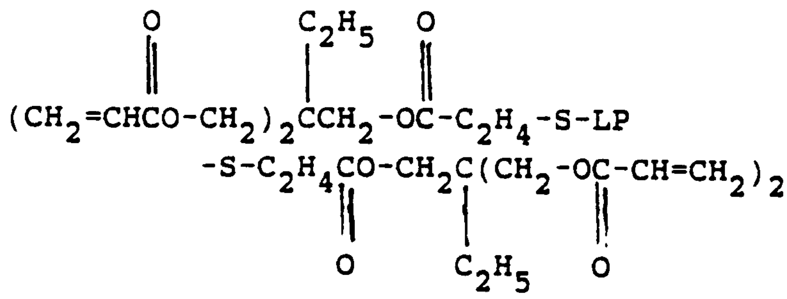

A second composition (Part B) was prepared by mixing 25 parts of mercaptan - terminated polysulfide (LP-3) and 6 parts of 2,4,6-tri(dimethylaminomethyl)phenol.

Parts A and B were blended together. Gelling occurred within 2-3 minutes at room temperature. Full cure of the epoxy resin system took about 2 weeks at room temperature.

EXAMPLE 2

Compositions were prepared having the following general formula:

| | |
|---|---|
| Epoxide resin (WPE 300) | 100 pbw |
| LP-3 | 35 pbw |
| Ancamine 1618 | 52 pbw |
| Accelerator | 10 pbw |

In each case, the epoxy resin was mixed with the accelerator as one part; the Ancamine was mixed with LP-3; and the two parts were mixed together at room temperature to obtain the measurements in table 2 below.

In sample 1, no accelerator was used.

In sample 2, the accelerator (acrylate-terminated polysulfide) of Example 1 was used.

In sample 3, an accelerator similar to that (prepared from LP-3) but having an acrylate functionality of only 2 was used. This acrylate has the general formula:

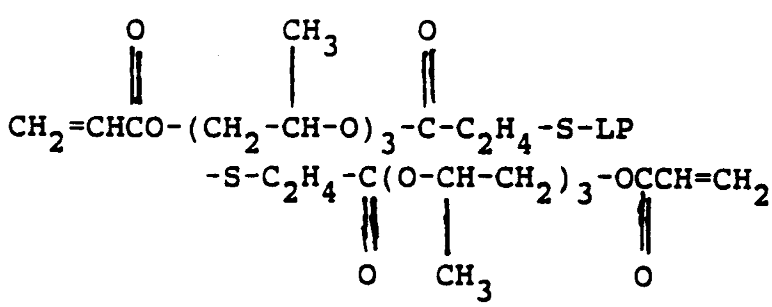

In sample 4, the accelerator was Capcure 3800 having the formula:

$R-(O(C_3H_6O)_nCH_2CHOHCH_2SH)_3$

where R is an aliphatic hydrocarbon, n = 1.

In sample 5, the accelerator was NC 700 having the formula:

m-$C_{15}H_{27}$phenol

In sample 6, the accelerator was MTP 400 having the formula

$HSCH_2CHOHCH_2(OCH(CH_3)CH_2)_n\text{-}OCH_2CHOHCH_2SH$

where n is about 12.

Gel times and Set times are set forth in Table 2.

TABLE 2

| Samples | Gel time (minutes) | Set time (minutes) |
|---|---|---|
| 1 | 105 | 155 |
| 2 | 10 | 120 |
| 3 | 75 | 135 |
| 4 | 60 | 90 |
| 5 | 60 | 100 |
| 6 | 35 | 90 |

It can be seen that the tetraacrylated LP provides a much faster cure than any of the other accelerators tried.

EXAMPLE 3

Formulations similar to sample 2 of Example 2 were prepared with varying levels of LP-3, tetraacrylate functional LP, LP-3 and Ancamine 1618. These amounts are shown in Table 3a below:

TABLE 3a

| | 1 | 2 | 3 | 4 | 5 | 6 |
|---|---|---|---|---|---|---|
| Epoxide resin 300 | 100 | 100 | 100 | 100 | 100 | 100 |
| LP3 | 0 | 1 | 3 | 7 | 10 | 35 |
| Accelerator | 0 | 34 | 32 | 28 | 25 | 0 |
| Ancamine 1618 | 60 | 60 | 60 | 60 | 60 | 52 |

Gel time, Set time and Exotherm are shown in Table 3b below:

TABLE 3b

| Sample | Gel time (hrs:mins) | Set time (hrs:mins) | Exotherm (°C) |
|---|---|---|---|
| 1 | 0:45 | 0:55 | 106 |
| 2 | 0:15 | 1:40 | --- |
| 3 | 0:04 | 1:30 | 47 |
| 4 | 0:03 | 1:15 | 50 |
| 5 | 0:02 | 1:30 | 57 |
| 6 | 1:45 | 2:35 | 70 |

It is to be noted that the exotherm of samples containing both the acrylated liquid polysulfide and the mercaptan-terminated polysulfide are low compared to sample 1 containing only the epoxy resin and the cure catalyst. Thus, rapid gel is achieved without a high exotherm. High exotherms can be problematic when a curable system is used in association with sensitive electronic circuitry.

EXAMPLE 4

A formulation was prepared as follows having an average acrylate functionality of 3:

| | |
|---|---|
| The tetraacrylate of Example 1 | 10 pbw |
| The diacrylate of Example 2, sample 3 | 10 pbw |
| LP-3 | 20 pbw |
| Epon 828 (Bisphenol A epoxy) | 20 pbw |
| Tridimethylaminomethyl phenol | 5 pbw |

Gel time was 2-3 minutes at room temperature.

Applicant has used in several instances polysulfide-based components to exemplify the present invention. This was done partly because of applicant's accessibility to modified and unmodified polysulfides. However, there is no intention to limit the invention to polysulfide-based components or to necessarily suggest that polysulfide-based components are preferred for any particular application. Production of polysulfide polymers with terminal mercaptan groups is well known, e.g., U.S. Patent No. 2,466,963. Production of polysulfide polymers end-capped with epoxide groups is described, for example, in U.S. Patent No. 2,731,437 to Bender et al.

## Claims

**1.** A curable epoxy composition comprising, by weight:
(A) 100 parts of an epoxy group-containing resin having an epoxy functionality of 2 or higher,
(B) from 1 to 100 parts of a Lewis base curative for said epoxy group-containing resin,
(C) from 10 to 100 parts of a component having an acrylate functionality of 2 or higher, and
(D) from 5 to 100 parts of a component having a mercaptan functionality of 2 or higher,
said components (C) and (D) having the sum of an acrylate functionality plus a mercaptan functionality of at least 4.5, said components (C) and (D) in the presence of said Lewis base (B) rapidly gelling prior to substantial cure of said component (A) in the presence of said Lewis base (B).

**2.** A composition according to Claim 1 packaged as a two-package system in which components (A) and (C) are packaged together and said components (B) and (D) are packaged together.

**3.** A composition according to Claim 1 or Claim 2 wherein said Lewis base (B) is a tertiary amine or a polyamide.

**4.** A composition according to any preceding claim wherein said epoxy group-containing resin (A) is selected from resins derived from epichlorohydrin and bisphenol A, epoxy cresol novolac resins, epoxy phenol novolac resins, bisphenol F resins, polynuclear phenol-glycidyl ether-derived resins, cycloaliphatic resins, tetraglycicylmethylenedianiline-derived resins, triglycidyl-p-aminophenol-derived resins, triazine-based resin, and hydantoin epoxy resins.

**5.** A composition according to any one of Claims 1 to 3 wherein said epoxy group-containing resin (A) is a polysulfide end-capped with an epoxy group-containing moiety.

**6.** A composition according to any preceding claim wherein said component (C) is a polysulfide end-capped with an acrylate group-containing moiety.

**7.** A composition according to any preceding claim wherein said component (D) is a -SH-terminated polysulfide.